# EUROPEAN PATENT SPECIFICATION

(11) **EP 0 676 282 B1**
(45) Date of publication and mention of the grant of the patent: **08.08.2007**
(21) Application number: 94903098.5
(22) Date of filing: 28.12.1993
(51) Int. Cl.: B32B 27/10, B65D 5/56

(54) **WRAPPING MATERIAL, AND METHOD AND APPARATUS FOR MANUFACTURING THE SAME**
EINPACKMATERIAL, VERFAHREN UND APPARAT ZU SEINER HERSTELLUNG
MATERIAU D'ENVELOPPEMENT ET SES PROCEDE ET APPAREIL DE PRODUCTION

(30) Priority: 28.12.1992 JP 34905092
(43) Date of publication of application: 11.10.1995
(60) Divisional application: 04026124.0
(73) Proprietor: Tetra Laval Holdings & Finance SA, 1009 Pully (CH)
(72) Inventor: KOBINATA, Motochika, Gotenba-shi, Sizuoka 412 (JP); NAGASHIMA, Michio, Kawasaki-shi, Kanagawa 213 (JP); HARA, Morio, Naka-gun, Kanagawa 259-01 (JP)
(74) Representative: Müller, Hans-Jürgen
(86) International application number: PCT/JP1993/001926
(87) International publication number: WO 1994/014610

(56) References cited:
- EP-A- 0 138 612
- EP-A- 0 293 252
- WO-A-91/15410
- WO-A-92/01558
- DE-A- 2 704 689
- GB-A- 1 080 649
- JP-A- 1 139 339
- JP-A- 4 267 732
- US-A- 4 950 510
- DATABASE WPI Section Ch, Week 8327 Derwent Publications Ltd., London, GB; Class A94, AN 83-701928 & JP-A-58 087 393 ( HONSHU PAPER MFG KK) , 25 May 1983

## Description

### TECHNICAL FIELD

The present invention relates a packaging material, and a process for producing the same.

### BACKGROUND ART

A package or container has conventionally been used to accommodate foods such as refreshing drinks, jams and other convenience foods. The packaging container may be formed by processing a packaging material into a brick-like configuration. The packaging material comprises a paperboard or paper substrate, and an aluminum foil layer formed on an inner surface of the substrate with a polymer layer interposed therebetween and formed from, for example, an adhesive polymer. Thus, the aluminum foil layer provides an improved gas barrier property against a content within the package or container.

Further, a polyethylene layer is formed on an inner surface of the aluminum foil layer with an adhesive polymer interposed therebetween, and a polyethylene layer is also formed on an outer surface of the substrate. It should be noted that the two adhesive polymer layers are provided in order to improve the adhesion between the substrate and the aluminum foil layer and between the aluminum foil layer and the polyethylene layer.

Such a packaging material has conventionally been provided, which is made using a grease-proof paper layer (GPP) having an oil resistance and a large TAPPI value more than 900 seconds, with a polymer layer made of a polyolefin such as polypropylene (PP)' being formed between the grease-proof paper layer and a cardboard substrate (see Japanese Patent Application Laid-open No.139339/89).

In such a case, the gas barrier property of the packaging material made using each of the grease-proof paper layer and the polymer layer alone is not particularly high, but the gas barrier property can be enhanced by forming a combination of the grease-proof paper layer and the polymer layer in a laminated structure.

In the above prior art packaging material, however, the grease-proof paper layer having a large TAPPI value and the adhesive polymer layer are laminated in a face-to-face manner and hence, the adhesive polymer cannot be satisfactorily incorporated into the grease-proof paper layer. Consequently, it is impossible to provide an enhanced gas barrier property.

>Document WO-A-92/01558 discloses a packaging material consisting of a laminate including layers having a relatively good gas barrier property compared to polyethylene. For example, the document discloses a laminate having (a) a moisture-barrier and heat-sealing layer of low density polyethylene, (b) a paper board stiffening layer, (c) an O₂-barrier polymer, (d) a grease-proof paper layer and (e) a moisture-barrier and heat sealing layer. The surfaces of the various layers may be treated, for example flame- or corona-discharge-treated, to enhance adhesion or sealability. Although such laminate has good barrier properties, odours may enter the packaging content from the packaging material itself. This may happen since polymers in the molten state are applied to the grease-proof paper, by which a degradation of the polymer into volatile sub-products can occur.

EP-A-0 313 356 discloses a laminate of a basic member and a polyolefin, for use for containers for food products, characterized in that the basic member of paper board is provided with a gas barrier layer in the form of a layer of grease-proof paper which has low air permeability and a grease-resistance higher than app. 900 sec. TAPPI, preferably in the range of app. 1600 sec., this grease-proof paper being laminated to the paper board by the aid of a polyolefin.

GB-A-1 080 649 discloses a method of treating the surface of a substrate to improve the adherence of the surface to a subsequently applied extrusion coating of a polyolefin plastics material, the method comprising subjecting the surface to the action of a corona discharge.

WO-A-91/15410 discloses a gastight packaging material for use as a packaging for aroma or gas emitting products, which material comprises a grease repellent layer of brown paper/grease-proof paper with a TAPPI value of about 160 sec coated with a plastic layer of a polyolefin kind.

Accordingly, it is an object of the present invention to provide a packaging material and a process for producing the same, the packaging material having good gas barrier properties without using an aluminium foil, and without odour being transferred from the container packaging to the contents thereof.

### DISCLOSURE OF THE INVENTION

To achieve the above object, according to a first aspect of the present invention, there is provided a packaging material having a laminate structure comprising a first layer formed on an outer surface which will be directed outwardly upon formation of a packaging container from the packaging material, a second layer formed on an inner surface which will be directed inwardly upon formation of the packaging container from the packaging material, at least a substrate and a grease-proof paper layer formed between the first and second layers, said first layer is being formed on said substrate, and at least one of the first and second layers is formed from a polymer selected from the group consisting of polyolefin, and a first polymer layer interposed between said substrate and said grease-proof paper layer, wherein
a) both surfaces of said grease-proof paper layer are subjected to a surface-activating corona or thermal treatment prior to the application of layers,
b) a second polymer layer is extruded onto the inner surface of said grease-proof paper layer, thereby being incorporated into the grease-proof paper layer and providing an enhanced gas barrier property of said grease-proof paper layer, wherein said second polymer layer is formed from an adhesive polymer,
c) said grease-proof paper layer has a TAPPI value in a range of 100 to 400 seconds, and
d) said second layer is formed from a polymer and coated onto the second polymer layer in the form of a film.

Thus, the packaging material has an enhanced gas barrier property. The surface of the grease-proof paper layer coated with the polymer is activated by a surface-activating treatment. Therefore, the adhesion between the grease-proof paper layer and the polymer layer is enhanced, so that the polymer of the polymer layer can be sufficiently incorporated into the grease-proof payer layer to satisfactorily enhance the gas barrier property of the packaging material.

In this case, the surface-activating treatment may be performed by discharging corona onto the surface of the grease-proof paper layer, or baking the surface of the grease-proof paper layer. The polymer which may be used is one selected from the group consisting of polyolefins. The second layer may be formed from a barrier polymer, or a barrier layer formed form a polymer having a barrier property may be provided between the first and second layers. In this case, the gas barrier property of the packaging material can be further enhanced.

Further, according to a second aspect of the present invention, there is provided a process for producing a packaging material having a laminate structure comprising a first layer formed on an outer surface which will be directed outwardly upon formation of a packaging container from the packaging material, a second layer formed on an inner surface which will be directed inwardly upon formation of the packaging container from the packaging material, and at least a substrate and a grease-proof paper layer formed between the first and second layers, said first layer is being formed on said substrate, and at least one of said first and second layers is formed from a polymer selected from the group consisting of polyolefins, said process comprising the steps of
- delivering a substrate and a grease-proof paper sheet,
- interposing a first polymer layer between said substrate and said grease-proof paper sheet,
- subjecting both surfaces of said grease-proof paper sheet to a surface-activating corona or thermal treatment to activate said surfaces prior to the application of layers,
- extruding a second polymer layer onto the inner surface of said grease-proof paper sheet, thereby incorporating said second polymer layer into said grease-proof paper sheet and providing an enhanced gas barrier property of said grease-proof paper sheet, wherein said grease-proof paper sheet has a TAPPI value in a range of 100 to 400 seconds and said second polymer layer is formed from an adhesive polymer,
- coating said second layer, which is formed from a polymer, onto the inner surface of said second polymer layer (36) in the form of a film, and
- laminating said grease-proof paper sheet with said second polymer layer and said second layer formed thereon and said substrate with said first polymer layer onto each other.

Thus, the polymer layer is formed continuously. The grease-proof paper sheet and the polymer layer are laminated with the substrate to form the packaging material, leading to an improved productivity.
In this process, the surface-activating treatment is performed by discharging corona onto the surface of the grease-proof paper sheet, or baking such surface. The polymer which may be used is one of polyolefins.

### BRIEF DESCRIPTION OF THE DRAWINGS

Fig. 1 is a diagram illustrating a process for producing a packaging material according to an embodiment of the present invention;
Fig. 2 is a sectional view of a packaging material produced by the producing process according to an embodiment of the present invention;

### BEST MODE FOR CARRYING OUT THE INVENTION

The best mode for carrying out the present invention will now be described in detail in connection with the accompanying drawings.

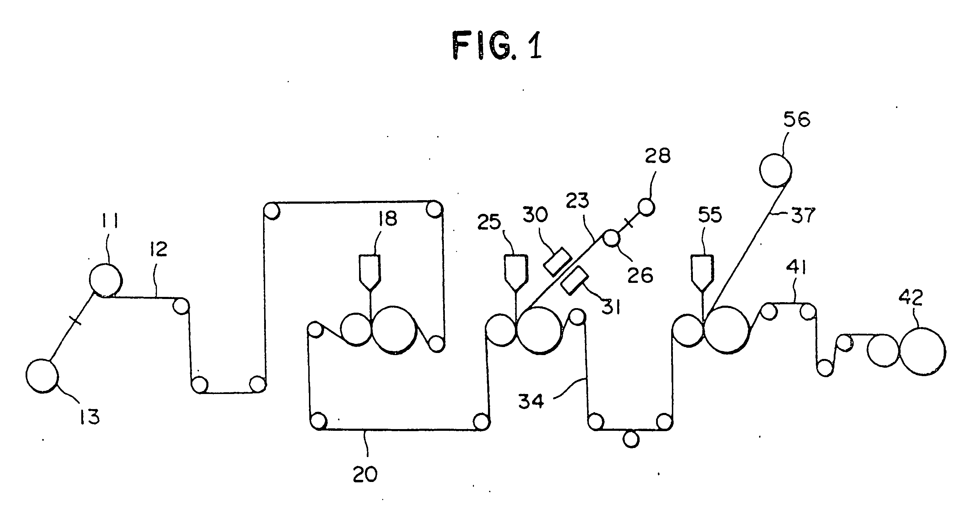

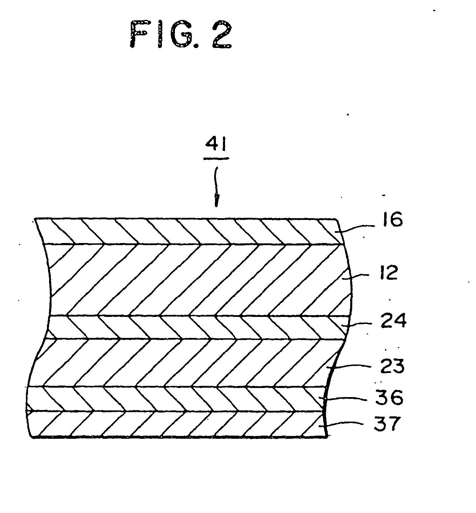

Fig. 1 is a diagram illustrating a process for producing a packaging material according to an embodiment of the present invention, and Fig. 2 is a sectional view of a packaging material produced by the producing process according to an embodiment of the present invention.

In this embodiment, an adhesive polymer is coated on an inner surface of a grease-proof paper layer 23 of a laminate 34 of the type described above to form a polymer layer 36, and a polymer or a barrier polymer is coated onto the polymer layer 36 in the form of a film having a low temperature to form a second layer 37, thereby preventing an odor from being given out from the polymer layer 36.

Referring to Fig. 1, a roll of paperboard 12 serving as a substrate is designated by 11, and the paperboard 12 is delivered from the roll 11 by the feeder 13 and transported. A polymer such as a low density polyethylene or an adhesive polymer such as an ethylene/acrylic acid copolymer is applied to the outer surface of the paperboard 12 to form a first layer 16. For this purpose, the first extruding die device 18 is disposed in an opposed relation to the outer surface of the paperboard 12.

The paperboard 12 with the first layer 16 formed thereon is transported in the form of a laminate 20, and a polymer layer 24 is laminated in a face-to-face manner onto the inner surface of the paperboard 12 of the laminate 20.

For this purpose, a second extruding die device 25 and a roll of grease-proof paper 26. are disposed in an opposed relation to the inner surface of the paperboard 12 downstream -of the first extruding die device 18. Thus, an adhesive polymer such as an ethylene/acrylic acid copolymer extruded from the second extruding die device 25 or a polymer such as a low density polyethylene and a linear low density polyethylene is applied to the inner surface of the paperboard 12 to form a polymer layer 24, and a grease-proof paper sheet 23 delivered, by the feeder is laminated onto-the laminate 20 with the polymer layer.24 interposed therebetween.

A paper sheet having a high oil-resistance and a TAPPI value in a range of 100 to 400 seconds is used for the greäse-proof paper sheet. The outer surface of the grease-proof paper sheet 23, before being brought into contact with the polymer extruded from the second extruding device 25, is subjected to the surface-activating treatment. For this purpose, a surface-activating device 30 is disposed in an opposed relation to the outer surface of the grease-proof paper sheet 23 by the feeder 28.

The surface-activating device 30 may be comprised of either a corona treating device (not shown) for providing a corona discharge or a thermally treating device (not shown) using a gas burner, or both of them. Thus, the outer surface of the grease-proof paper sheet 23 is subjected to the corona discharge provided by the corona treating device, and/or may be baked by the thermally treating device.

This ensures that a carbonyl group can be formed on the outer surface of the grease-proof paper sheet 23, thereby providing a polarity to provide a wet index of about 42 to 50 dynes, so that the outer surface is activated. Consequently, the grease-proof paper sheet 23 and the polymer layer 24 are bonded satisfactorily, and the adhesive polymer or the polymer is incorporated satisfactorily into the grease-proof paper sheet 23, thereby providing an enhanced gas barrier property.

The inner surface of the grease-proof paper sheet 23 is also subjected to the surface-activating treatment. For this purpose, a surface-activating device 31 is disposed in such a manner that it is opposed to the inner surface of the grease-proof paper sheet 23 delivered by the feeder 28.

As is the surface-activating device 30, the surface-activating device 31 may be also comprised of either a corona treating device (not shown) for providing a corona discharge or a thermally treating device (not shown) using a gas burner, or both of them. Thus, the inner surface of the grease-proof paper sheet 23 may be subjected to the corona discharge provided by the corona treating device and/or may be baked by the thermally treating device. It should be noted that the surface-activating device 31 is disposed in an opposed relation to the surface-activating device 30 in this embodiment, but alternatively, the surface-activating device 31 may be disposed at a location in which it will be opposed to the inner surface of a laminate 34 comprising the paperboard 12, the first layer 16, the polymer layer 24 and the grease-proof paper layer 23, downstream of the second extruding die device 25.

This ensures that a carbonyl group can be formed on the outer surface of the grease-proof paper sheet 23, thereby providing a polarity to provide a wet index of about 42 to 50 dynes, so that the outer surface is activated.

Then, an adhesive polymer is applied to that inner surface of the laminate 34 which has been subjected to the surface-activating treatment, thereby forming a polymer layer 36, and a polymer or a barrier polymer is further applied to the inner surface of the polymer layer 36 to form a second layer 37. In this case, only one or both of the polymer and the barrier polymer may be applied to the inner surface of the polymer layer 36 to form the second layer 37.

For this purpose, a third extruding die device 55 and a film roll 56 are disposed in an opposed relation to the inner surface of the grease-proof paper layer of the laminate 34 downstream of the second extruding die device 25. Thus, an adhesive polymer is extruded from the third extruding die device 55, and a film-like material for forming the second layer 37 is delivered from a feeder which is not shown.

Such a construction ensures that the grease-proof paper sheet 23 with its inner surface activated and the polymer layer 36 are bonded satisfactorily, and the adhesive polymer or the polymer is incorporated satisfactorily into the grease-proof paper sheet 23, thereby providing an improved gas barrier property.

In this manner, the polymer layer 36 and the second layer 37 are formed on the laminate 34, thereby completing a packaging material. This packaging material is wound around a winding roll 42 by a winder which is not shown.

In this case, because the adhesive polymer is used for the polymer layer 36, the adhesion between the grease-proof paper sheet 23 and the second layer 37 is good, and a polymer or a barrier polymer for the second layer 37, after being extruded from an extruding die device (which is not shown) and cooled sufficiently, can be supplied in the form of a film having a low temperature onto the inner surface of the grease-proof paper sheet 23. Therefore, it is possible to prevent the adhesive polymer from giving out an odor.

An ethylene/acrylic acid copolymer may be used as the adhesive polymer for forming the polymer layer 36. A polymer such as a low density polyethylene, a linear low density polyethylene and the like may be used as the polymer for forming the second layer 37, and a polymer such as a polyester, an amorphous polyester, an ethylene/vinyl alcohol copolymer, a polyvinylidene chloride and the like may be used as the barrier polymer for forming the second layer 37.

The laminated structure of the packaging material 41 according to the second embodiment of the present invention will be described below.

Even in this case, a material is shown which has a first layer 16, a paperboard 12, a polymer layer 24, a grease-proof paper layer 23, a polymer layer 36 and a second layer 37 from a left end to a right end.
LDPE/Paper/LDPE/GPP/Adh.Polymer/LDPE.
LDPE/Paper/LDPE/GPP/EAA/LDPE
LDPE/Paper/Adh. Polymer/GPP/Adh. Polymer/L-LDPE
LDPE/Paper/Adh.Polymer/GPP/Adh.Polymer/Barrier Polymer
LDPE/Paper/Adh. Polymer/GPP/Adh.Polymer/APET
LDPE/Paper/Adh. Polymer/GPP/Adh. Polymer/APA.
LDPE/Paper/Adh. Polymer/GPP/Adh. Polymer/APET
LDPE/Paper/Adh. Polymer/GPP/Adh. Polymer/PVDC
LDPE/Paper/L-LDPE/GPP/Adh.Polymer/L-LDPE
Adh. Polymer/Paper/L-LDPE/GPP/Adh. Polymer/L-LDPE

Although the embodiments of the present invention have been described in detail, it will be understood that the present invention is not limited to these embodiments, and various modifications can be made without departing from the spirit and scope of the invention defined in claims.

### INDUSTRIAL APPLICABILITY

As discussed above, the packaging material and the process and apparatus for producing the same according to the present invention are useful in producing a package or container having a gas barrier property from the packaging material.

## Claims

1. A packaging material having a laminate structure comprising a first layer (16) formed on an outer surface which will be directed outwardly upon formation of a packaging container from the packaging material,
a second layer (37) formed on an inner surface which will be directed inwardly upon formation of the packaging container from the packaging material,
at least a substrate (12) and a grease-proof paper layer (23) formed between said first and second layers (16, 37), said first layer (16) is being formed on said substrate (12), and at least one of said first and second layers (16, 37) is formed from a polymer selected from the group consisting of polyolefins, and
a first polymer layer (24) interposed between said substrate (12) and said grease-proof paper layer (23), wherein
a) both surfaces of said grease-proof paper layer (23) are subjected to a surface-activating corona or thermal treatment prior to the application of layers (24, 36),
b) a second polymer layer (36) is extruded onto the inner surface of said grease-proof paper layer (23), thereby being incorporated into the grease-proof paper layer (23) and providing an enhanced gas barrier property of said grease-proof paper layer (23), wherein said second polymer layer (36) is formed from an adhesive polymer,
c) said grease-proof paper layer (23) has a TAPPI value in a range of 100 to 400 seconds, and
d) said second layer (37) is formed from a polymer and coated onto the second polymer layer (36) in the form of a film.

2. A packaging material according to claim 1,
**characterized in that**,
said second layer (37) is formed from a barrier polymer.

3. A process for producing a packaging material having
a laminate structure comprising
a first layer (16) formed on an outer surface which will be directed outwardly upon formation of a packaging container from the packaging material,
a second layer (37) formed on an inner surface which will be directed inwardly upon formation of the packaging container from the packaging material, and
at least a substrate (12) and a grease-proof paper layer (23) formed between the first and second layers (16, 37), said first layer (16) is being formed on said substrate (12), and
at least one of said first and second layers (16, 37) is formed from a polymer selected from the group consisting of polyolefins,
said process comprising the steps of
- delivering a substrate (12) and a grease-proof paper sheet (23) .
- interposing a first polymer layer (24) between said substrate (12) and said grease-proof paper sheet (23),
- subjecting both surfaces of said grease-proof paper sheet (23) to a surface-activating corona or thermal treatment to activate said surfaces prior to the application of layers (24, 36),
- extruding a second polymer layer (36) onto the inner surface of said grease-proof paper sheet (23), thereby incorporating said second polymer layer (36) into said grease-proof paper sheet (23) and providing an enhanced gas barrier property of said grease-proof paper sheet (23), wherein said grease-proof paper sheet (23) has a TAPPI value in a range of 100 to 400 seconds and said second polymer layer (36) is formed from an adhesive polymer,
- coating said second layer (37), which is formed from a polymer, onto the inner surface of said second polymer layer (36) in the form of a film, and
- laminating said grease-proof paper sheet (23) with said second polymer layer (36) and said second layer (37) formed thereon and said substrate (12) with said first polymer layer (24) onto each other.

4. A process according to claim 3,
**characterized in that**,
a barrier polymer is coated onto the surface of said polymer layer (36) to form the second layer (37).

## Patentansprüche

1. Verpackungsmaterial mit einer Laminatstruktur umfassend eine ersten Schicht (16), die auf einer äußeren Fläche gebildet wird, welche bei der Herstellung eines Verpackungsbehälters aus dem Verpackungsmaterial nach außen zeigt,
eine zweiten Schicht (37), die auf einer inneren Fläche gebildet wird, welche bei der. Herstellung des Verpackungsbehälters aus dem Verpackungsmaterial nach innen zeigt,
wenigstens ein Substrat (12) und eine fettabweisende Papierschicht (23), die sich zwischen der ersten und der zweiten Schicht (16, 37) befindet, wobei die erste Schicht (16) auf dem Substrat (12) gebildet wird, und
zumindest eine, die erste oder zweite Schicht (16, 37) aus einem Polymer besteht, das aus der aus Polyolefinen bestehenden Gruppe ausgewählt wurde, und
eine erste Polymerschicht (24), die sich zwischen dem Substrat (12) und der fettabweisenden Papierschicht (23) befindet, wobei
a) beide Flächen der fettabweisenden Papierschicht (23) einer oberflächenaktivierenden Korona- oder einer Wärmebehandlung vor dem Aufbringen der Schichten (24, 36) unterzogen werden,
b) eine zweite Polymerschicht (36) auf die Innenfläche der fettabweisenden Papierschicht (23) extrudiert wird, wobei diese in die fettabweisende Papierschicht (23) eingefügt wird und für eine verstärkte Gassperreigenschaft der fettabweisenden Papierschicht (23) sorgt, wobei die zweite Polymerschicht (36) aus einem klebenden Polymer besteht,
c) die fettabweisende Papierschicht (23) einen TAPPI-Wert im Bereich von 100 bis 400 Sekunden hat, und
d) die zweite Schicht (37) aus einem Polymer besteht und auf die zweite Polymerschicht (36) in Form einer Folie aufgebracht wird.

2. Verpackungsmaterial nach Anspruch 1, **dadurch gekennzeichnet, dass** die zweite Schicht (37) aus einem Sperrpolymer besteht.

3. Verfahren zur Herstellung eines Verpackungsmaterials mit einer Laminatstruktur umfassend
eine erste Schicht (16), die auf einer äußeren Fläche gebildet wird, die bei der Herstellung eines Verpackungsbehälters aus dem Verpackungsmaterial nach außen zeigt,
eine zweite Schicht (37), die auf einer inneren Fläche gebildet wird, die bei der Herstellung des Verpackungsbehälters aus dem Verpackungsmaterial nach innen zeigt, und
wenigstens ein Substrat (12) und eine fettabweisende Papierschicht (23), die zwischen der ersten und der zweiten Schicht (16, 37) liegt, wobei die erste Schicht (16) auf dem Substrat (12) gebildet wird, und
wenigstens eine, die erste oder die zweite Schicht (16, 37) aus einem Polymer besteht, das aus der aus Polyolefinen bestehenden Gruppe ausgewählt wurde,
wobei das Verfahren die Schritte umfasst:
- Zuführen eines Substrats (12) und eines fettabweisenden Papierbogens (23),
- Einbringen einer ersten Polymerschicht (24) zwischen dem Substrat (12) und dem fettabweisenden Papierbogen (23),
- Unterziehen beider Flächen des fettabweisenden Papierbogens (23) einer oberflächenaktivierenden Korona- oder Wärmebehandlung, um die Flächen vor dem Aufbringen der Schichten (24, 36) zu aktivieren,
- Extrudieren einer zweiten Polymerschicht (36) auf die Innenfläche des fettabweisenden Papierbogens (23), wodurch die zweite Polymerschicht (36) in den fettabweisenden Papierbogen (23) eingearbeitet wird und für eine verstärkte Gassperreigenschaft des fettabweisenden Papierbogens (23) sorgt, wobei der fettabweisende Papierbogen (23) einen TAPPI-Wert im Bereich von 100 bis 400 Sekunden hat und die zweite Polymerschicht (36) aus einem klebenden Polymer besteht,
- Aufbringen der zweiten Schicht (37), die aus einem Polymer besteht, auf die Innenfläche der zweiten Polymerschicht (36) in Form einer Folie, und
- Laminieren des fettabweisenden Papierbogens (23) mit der zweiten Polymerschicht (36) und der zweiten darauf gebildeten Schicht (37) und Laminieren des Substrats (12) mit der ersten Polymerschicht (24) aufeinander.

4. Verfahren nach Anspruch 3, **dadurch gekennzeichnet, dass** ein Sperrpolymer auf die Oberfläche der Polymerschicht (36) aufgebracht wird, um die zweite Schicht (37) zu bilden.

## Revendications

1. Matériau d'emballage possédant une structure stratifiée comprenant une première couche (16) formée sur une surface extérieure qui sera dirigée vers l'extérieur lors de la formation d'un conteneur d'emballage à partir du matériau d'emballage,
une seconde couche (37) formée sur une surface intérieure qui sera dirigée vers l'intérieur lors de la formation du conteneur d'emballage à partir du matériau d'emballage,
au moins un substrat (12) et une couche de papier imperméable aux graisses (23) formées entre lesdites première et seconde couches (16, 37), ladite première couche (16) étant formée sur ledit substrat (12), et au moins l'une desdites première et seconde couches (16, 37) étant formée à partir d'un polymère sélectionné dans le groupe composé de polyoléfines; et
une première couche de polymère (24) intercalée entre ledit substrat (12) et ladite couche de papier imperméable aux graisses (23), dans lequel
a) les deux surfaces de ladite couche de papier imperméable aux graisses (23) sont soumises à un traitement corona ou thermique, d'activation de surface, avant l'application de couches (24, 36),
b) une seconde couche de polymère (36) est extrudée sur la surface intérieure de ladite couche de papier imperméable aux graisses (23), pour ainsi incorporer celle-ci dans la couche de papier imperméable aux graisses (23) et conférer une propriété améliorée de barrière aux gaz de ladite couche de papier imperméable aux graisses (23), ladite seconde couche de polymère (36) étant formée à partir d'un polymère adhésif,
c) ladite couche de papier imperméable aux graisses (23) possède une valeur TAPPI comprise dans la plage de 100 à 400 secondes, et
d) ladite seconde couche (37) est formée à partir d'un polymère et appliquée sur la seconde couche de polymère (36) sous la forme d'un film.

2. Matériau d'emballage selon la revendication 1,
**caractérisé en ce que** ladite seconde couche (37) est formée à partir d'un polymère barrière.

3. Procédé de production d'un matériau d'emballage possédant une structure stratifiée comprenant
une première couche (16) formée sur une surface extérieure qui sera dirigée vers l'extérieur lors de la formation d'un conteneur d'emballage à partir du matériau d'emballage,
une seconde couche (37) formée sur une surface intérieure qui sera dirigée vers l'intérieur lors de la formation du conteneur d'emballage à partir du matériau d'emballage, et
au moins un substrat (12) et une couche de papier imperméable aux graisses (23) formées entre lesdites première et seconde couches (16, 37), ladite première couche (37) étant formée sur ledit substrat (12), et au moins l'une desdites première et seconde couches (16, 37) étant formée à partir d'un polymère sélectionné dans le groupe composé de polyoléfines,
ledit procédé comprenant les étapes consistant à
- délivrer un substrat (12) et une feuille de papier imperméable aux graisses (23),
- intercaler une première couche de polymère (24) entre ledit substrat (12) et ladite feuille de papier imperméable aux graisses (23),
- soumettre les deux surfaces de ladite feuille de papier imperméable aux graisses (23) à un traitement corona ou thermique, pour activer lesdites surfaces, avant l'application de couches (24, 36),
- extruder une seconde couche de polymère (36) sur la surface intérieure de ladite feuille de papier imperméable aux graisses (23), pour ainsi incorporer ladite seconde couche de polymère (36) dans ladite feuille de papier imperméable aux graisses (23) et conférer une propriété améliorée de barrière aux gaz de ladite feuille de papier imperméable aux graisses (23), ladite feuille de papier imperméable aux graisses (23) possédant une valeur TAPPI comprise dans la plage de 100 à 400 secondes, et ladite seconde couche de polymère (36) étant formée à partir d'un polymère adhésif,
- appliquer ladite seconde couche (37), qui est formée à partir d'un polymère, sur la surface intérieure de ladite seconde couche de polymère (36) sous la forme d'un film, et
- amener ladite feuille de papier imperméable aux graisses (23) sous la forme d'un stratifié avec ladite seconde couche de polymère (36) et ladite seconde couche (37) formées sur celle-ci et ledit substrat (12) avec ladite première couche de polymère (24).

4. Procédé selon la revendication 3,
**caractérisé en ce qu'**un polymère barrière est appliqué sur la surface de ladite couche de polymère (36) pour former la seconde couche (37).
